# EUROPÄISCHE PATENTSCHRIFT

(11) **EP 0 497 115 B1**
(45) Veröffentlichungstag und Bekanntmachung des Hinweises auf die Patenterteilung: **27.05.1998**
(21) Anmeldenummer: 92100370.3
(22) Anmeldetag: 11.01.1992
(51) Int. Cl.: H04H 1/00, H04B 1/16

(54) **Verfahren zur Überbrückung von Audiosignalunterbrechungen**
Method for bridging over audio signal interruptions
Procédé de shuntage des interruptions de signaux audio

(30) Priorität: 01.02.1991 DE 4103061; 01.02.1991 DE 4103064
(43) Veröffentlichungstag der Anmeldung: 05.08.1992
(73) Patentinhaber: Blaupunkt-Werke GmbH, 31132 Hildesheim (DE)
(72) Erfinder: Liman, Helmut, W-3204 Nordstemmen 4 (DE); Hegeler, Wilhelm, W-3200 Hildesheim (DE); Bochmann, Harald, Dr., W-3000 Hannover 21 (DE); Kässer, Jürgen, Dr., W-3201 Diekholzen (DE); Erben, Peter, W-3016 Seelze (DE); Henze, Werner, W-3053 Hohnhorst (DE)

(56) Entgegenhaltungen:
- EP-A- 403 744
- EP-A- 459 360
- US-A- 4 933 954
- PATENT ABSTRACTS OF JAPAN vol. 6, no. 182 (E-131)1) 18. September 1982 & JP-A-57 095 746 ( FUJITSU ) 14. Juni 1982
- PATENT ABSTRACTS OF JAPAN vol. 13, no. 198 (E-756) 11. Mai 1989 & JP-A-01 019 822 ( NEC ) 23. Januar 1989

## Beschreibung

Die Erfindung geht aus von einem Verfahren nach der Gattung des Hauptanspruchs.

Bei bekannten Rundfunkempfängern mit einer Einrichtung zur Decodierung von Radio-Daten-Signalen - im folgenden RDS-Empfänger genannt -, insbesondere Autoradios, wird von Zeit zu Zeit zunächst geprüft, ob ein Sender mit einer anderen Frequenz empfangswürdig ist und weiterhin ob er das gleiche Programm abstrahlt. Bei den bekannten RDS-Empfängern benötigen diese Prüfungen eine Zeit von 20 ms bis 30 ms bzw. 150 ms bis 300 ms, was zu störenden Knackgeräuschen führt, weil solange kein Audiosignal aus der empfangenen Frequenz zur Verfügung steht.

In der Patentanmeldung EP-A-0 497 116 der Anmelderin wird zwar ein Rundfunkempfänger angegeben, mit welchem die relativ groben Störungen (150 ms bis 300 ms) beseitigt werden. Es verbleiben jedoch die möglichen Störungen von kurzer Dauer, die insbesondere bei großen Amplituden des Audiosignals auftreten.

Aus der EP-A-0 403 744 ist ein RDS-Rundfunkempfänger mit Programmspeichern bekannt, deren Speicherinhalte fortwährend aktualisiert werden. Dazu werden alternative Frequenzen der unter gleichem Programmidentifikations-(PI)-Code ausgestrahlten Programme aus anderen Speichern in die Programmspeicher übernommen, wenn ihre Empfangsqualität bestimmten Mindestanforderungen genügt. Die Bestimmung der Empfangsqualität der alternativen Frequenzen erfolgt im Rahmen routinemäßiger Prüfzyklen durch kurzzeitiges Abstimmen des Empfängers auf die zu überprüfende Alternativfrequenz.

Schließlich ist aus der US-A-4 933 954 ein Abhörempfänger zur lückenlosen Auswertung von nach dem Frequenzsprungverfahren übertragenen Daten, bei dem die Informationen tragende Trägerfrequenz in schneller zeitlicher Folge nach einem bestimmten Muster geändert wird, bekannt. Dazu wird mittels einer schnellen Fouriertransformation (FFT) die aktuelle Sendefrequenz bestimmt und der Empfänger auf diese Frequenz abgestimmt. Das während der Durchführung der FFT und der Abstimmung des Empfängers gesendete modulierte Signal wird zusammen mit dem gesamten die Trägerfrequenzen des Frequenzsprungverfahrens umfassenden Frequenzband mittels eines breitbandigen Empfängers empfangen und nach Konvertierung in einen digitalen Datenstrom in einen digitalen Speicher eingeschrieben. Nach erfolgter Abstimmung des Empfängers auf die aktuelle Sendefrequenz wird das zwischengespeicherte Signal ausgelesen und mit der jetzt bekannten Trägerfrequenz demoduliert und ausgewertet.

Aufgabe der vorliegenden Erfindung ist es, die durch das probehalber Umschalten auf eine andere Frequenz bedingten Störungen unhörbar zu machen.

Bei einer ersten Ausführungsform des erfindungsgemäßen Verfahrens ist vorgesehen, daß in die während des vorübergehenden Umschaltens unterbrochenen Audiosignale Ersatzsignale eingesetzt werden und daß die Ersatzsignale durch Verzögern und Wiederholen eines jeweils vor dem vorübergehenden Umschalten empfangenen Signalabschnitts der Audiosignale gebildet werden.

Eine zweite Ausführungsform besteht darin, daß in die während des vorübergehenden Umschaltens unterbrochenen Audiosignale Ersatzsignale eingesetzt werden und daß die Ersatzsignale aus den Audiosignalen vor und nach der vorübergehenden Umschaltung gebildet werden.

Das erfindungsgemäße Verfahren hat den Vorteil, daß keinerlei störende Knackgeräusche mehr wahrgenommen werden können, wenn probehalber auf eine andere Frequenz umgeschaltet wird. Ein weiterer Vorteil besteht darin, daß bei Rundfunkempfängern, die bereits eine digitale Signalverarbeitung enthalten, der zusätzliche Aufwand im wesentlichen je nach Ausführungsform der Erfindung aus einem digitalen Speicher oder Signalprozessor besteht, die häufig ohnehin für andere Aufgaben im Rundfunkempfänger vorgesehen sind.

Die andere Frequenz kann an sich eine beliebige Frequenz sein. Zweckmäßigerweise werden jedoch probehalber alternative Frequenzen empfangen, die in einem Speicher im Rundfunkempfänger als zur gleichen Programmkette gehörend abgelegt sind.

Eine bevorzugte Anwendung der Erfindung sind Rundfunkempfänger mit einer Einrichtung zur Decodierung von Radio-Daten-Signalen, wobei im umgeschalteten Zustand das Radio-Daten-Signal empfangen und decodiert wird. Die Erfindung ist jedoch auch bei Empfängern anwendbar, bei denen eine andere Prüfung einer anderen Frequenz erfolgt, beispielsweise eine Messung der Feldstärke.

Eine Weiterbildung der Erfindung besteht darin, daß der Zeitpunkt des vorübergehenden Umschaltens und die Verzögerungsdauer von einem Nulldurchgang des Audiosignals abhängig sind. Dadurch ist ein in Bezug auf die Grundwelle phasenrichtiges Einpassen des Ersatzsignals möglich.

Eine andere Weiterbildung ist dadurch gekennzeichnet, daß aus den Audiosignalen in Zeitabschnitten vor und nach dem vorübergehenden Umschalten mit Hilfe einer Fourieranalyse die energiereichsten Komponenten ermittelt werden und daß die energiereichsten Komponenten jeweils zwischen den Audiosignalen vor dem vorübergehenden Umschalten und nach dem vorübergehenden Umschalten interpoliert werden.

Eine besonders vorteilhafte Maßnahme bei einem Rundfunkempfänger mit einer Einrichtung zum vorübergehenden Umschalten von einer empfangenen Frequenz auf eine andere Frequenz besteht darin, daß während der vorübergehenden Umschaltung ein monauraler Empfang erfolgt. Dieses hat den Vorteil, daß alle zur Erzeugung und zur Einblendung des Ersatzsignals erforderlichen Maßnahmen nur einmal getroffen zu werden brauchen. Dieses betrifft sowohl den Schaltungsaufwand als auch den Rechenaufwand bei der Verwendung von Prozessoren.

Vorzugsweise ist dabei vorgesehen, daß bereits vor der vorübergehenden Umschaltung auf monauralen Empfang umgeschaltet wird und daß ein Zurückschalten auf Stereo-Empfang erst nach dem Ende der vorübergehenden Umschaltung erfolgt. Dieses hat den Vorteil, daß auch die zur Bildung der Ersatzsignale benutzten Abschnitte der Audiosignale monaural empfangen werden und gegebenenfalls weniger mit Störungen behaftet sind.

Durch die in weiteren Unteransprüchen aufgeführten Maßnahmen sind weitere vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines ersten Ausführungsbeispiels,
- Fig. 2: ebenfalls als Blockschaltbild einige Teile eines zweiten Ausführungsbeispiels,
- Fig. 3: ein Blockschaltbild eines dritten Ausführungsbeispiels,
- Fig. 4: Zeitdiagramme einiger in dem Empfänger nach Fig. 3 auftretender Signale und
- Fig. 5: weitere Zeitdiagramme zur Erläuterung des Empfängers nach Fig. 3.

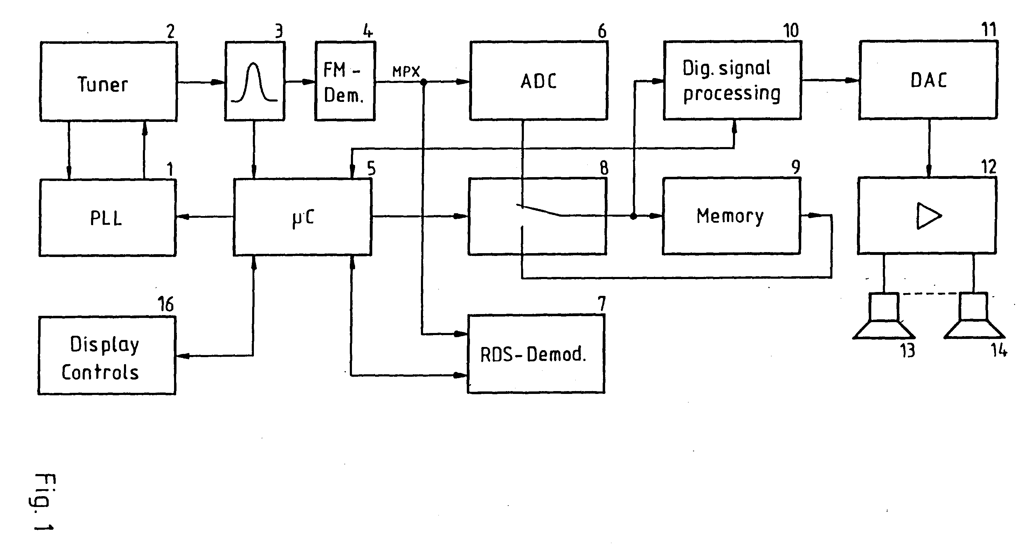

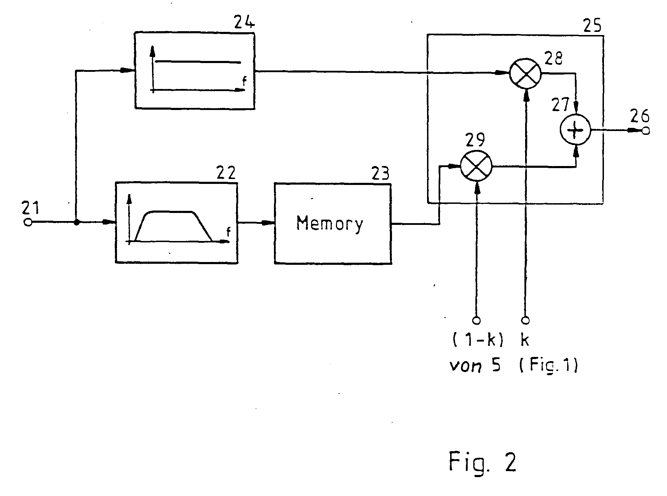

Bei dem Rundfunkempfänger gemäß Fig. 1 erfolgt die Abstimmung mit Hilfe eines Frequenz-Phasenregelkreises (PLL) 1, der in an sich bekannter Weise mit dem Hochfrequenzteil 2 verbunden ist. Das Ausgangssignal des Hochfrequenzteils 2 wird über einen ZF-Verstärker 3 einem Demodulator 4 zugeleitet. Mit Hilfe eines Mikrocomputers 5 wird die Abstimmung gesteuert und außerdem die Signalgüte beurteilt, wozu vom ZF-Verstärker 3 dem Mikrocomputer 5 ein geeignetes Signal, beispielsweise die Amplitude der ZF-Spannung zugeführt wird. Der Mikrocomputer 5 ist mit einer Einrichtung 16 zur Anzeige und Bedienung und mit einem RDS-Demodulator 7 verbunden.

An den Ausgang des Demodulators 4, welcher ein Multiplexsignal MPX führt, ist der Eingang eines Analog/Digital-Wandlers 6 und ein Eingang des RDS-Demodulators 7 angeschlossen. Außerdem wird vom Mikrocomputer 5 ein Umschalter 8 gesteuert, der wahlweise einen Ausgang des Analog/Digital-Wandlers 6 oder einen Ausgang eines Speichers 9 mit dem Eingang einer digitalen Signalverarbeitungsschaltung 10 verbindet. An den Ausgang der digitalen Signalverarbeitungsschaltung 10 ist ein Digital/Analog-Wandler 11 angeschlossen, dessen Ausgangssignal über Leistungsverstärker 12 Lautsprechern 13, 14 zuführbar ist.

Die digitale Signalverarbeitungsschaltung 10 kann vom Mikrocomputer 5 gesteuert werden, wozu eine entsprechende Leitungsverbindung zwischen beiden Baugruppen vorgesehen ist. Der Speicher 9 kann vorzugsweise von einem FIFO-Speicher gebildet sein und eine derartige Kapazität aufweisen, daß ein Audiosignal während der Dauer der vorübergehenden Unterbrechung gespeichert werden kann.

Im Normalbetrieb befindet sich der Umschalter 8 in der oberen Stellung, so daß die jeweils empfangenen Audiosignale unmittelbar vom Analog/Digital-Wandler 6 der digitalen Signalverarbeitungsschaltung 10 zugeführt werden. Das während des Normalbetriebs empfangene Audiosignal laufend in den Speicher 9 eingeschrieben. Aufgrund der Eigenschaften des FIFO-Speichers werden bei entsprechender Ansteuerung genausoviele Abtastwerte dem Ausgang des Speichers 9 entnommen, wie neue hinzugeführt werden. Damit verbleibt immer der "jüngste" Signalabschnitt vorgegebener Länge im Speicher.

Bei bekannten Empfängern mit einem probehalber Umschalten auf eine andere Frequenz wird während des Empfangs der anderen Frequenz der Signalweg der digitalen Signalverarbeitungsschaltung 10 unterbrochen. Bei dem erfindungsgemäßen Empfänger wird jedoch der gespeicherte Signalabschnitt als Ersatzzsignal verwendet. Dazu wird während einer vorübergehenden Umschaltung auf die andere Frequenz vom Mikrocomputer 5 der Umschalter in die untere Stellung gebracht, so daß die Ausgangssignale des Speichers 9 der digitalen Signalverarbeitungsschaltung 10 anstelle der empfangenen Audiosignale zugeführt werden. Außerdem werden die aus dem Speicher 9 ausgelesenen Signale wieder in den Speicher 9 eingeschrieben. Dadurch ist es möglich, die gespeicherten Signale mehrfach als Ersatzsignale zu verwenden.

Die Dauer der vorübergehenden Umschaltungen auf die andere Frequenz kann grundsätzlich verschieden lang sein. So kann es beispielsweise möglich sein, daß bei einem vorübergehenden Umschalten nur eine andere Frequenz geprüft wird, während bei einem anderen vorübergehenden Umschalten mehrere anderen Frequenzen nacheinander geprüft werden. Für einen derartigen Rundfunkempfänger kann es vorteilhaft sein, die Kapazität des Speichers derart auszulegen, daß sie für die Zeit eines normalen vorübergehenden Umschaltens ausreicht, während bei gegebenenfalls seltener auftretenden längeren Umschaltungen das gespeicherte Audiosignal mehrfach ausgelesen wird.

Um einerseits die durch das vorübergehende Umschalten bedingten Lücken im Audiosignal möglichst weitgehend zu ersetzen und andererseits durch den Vorgang des Einsetzens des möglicherweise nicht in jeder Hinsicht richtigen Ersatzsignals keine zusätzlichen Störungen zu erzeugen, ist gemäß einer Weiterbildung der Erfindung vorgesehen, daß bei der Bildung des Ersatzsignals eine Frequenzbandbegrenzung erfolgt. Demnach werden vorzugsweise die energiereichsten Spektralanteile des Audiosignals im Bereich von 300 Hz bis 5 kHz verwendet.

Fig. 2 zeigt einen Teil eines erfindungsgemäßen Empfängers mit dieser Weiterbildung. Dabei werden die digitalen Audiosignale vom Analog/Digital-Wandler 6 (Fig. 1) über den Anschluß 21 einerseits über einen Bandpaß 22 und einen Speicher 23 und andererseits über einen Allpaß 24 einer Überblendschaltung 25 zugeführt. Vom Ausgang 26 der Überblendschaltung 25 sind die digitalen Audiosignale zur Weiterverarbeitung und schließlich zur Wiedergabe abnehmbar. Die Überblendschaltung 25 besteht aus einem Addierer 27 und zwei vorgeschalteten Multiplizierern 28, 29, welchen Faktoren k und (1-k) vom Mikrocomputer 5 (Fig. 1) zugeführt werden. Beim Empfang der jeweils eingestellten Frequenz ist k = 1, so daß die über den Allpaß 24 geleiteten digitalen Audiosignale unverändert zum Ausgang 26 gelangen. Gleichzeitig wird jeweils der zuletzt empfangene Signalabschnitt im Speicher 23 abgelegt, wobei mit Hilfe des Bandpaßfilters 22 lediglich die energiereichsten Anteile berücksichtigt werden.

Zu Beginn einer vorübergehenden Unterbrechung wird k = 0, so daß (1-k) = 1 wird. Damit wird der im Speicher 23 befindliche Signalabschnitt zum Ausgang 26 geleitet. Während der Überblendzeit, die klein gegenüber der Dauer des vorübergehenden Umschaltens ist, erfolgt eine Mittelwertbildung zwischen den unbeeinflußten digitalen Audiosignalen und den aus dem Speicher 23 ausgelesenen. Dadurch werden störende Amplituden- und Phasensprünge in dem wiedergegebenen Audiosignal vermindert.

Die in den Figuren 1 und 2 als einzelne Funktionsblöcke aufgeführten Schaltungen können je nach Voraussetzungen im einzelnen auch zu größeren Einheiten zusammengefaßt werden. So ist es beispielsweise möglich, mit digitalen Signalprozessoren Filterfunktionen, die Rechenoperationen der Überblendschaltung und Schreib- und Lesevorgänge in bzw. aus dem Speicher auszuführen.

Bei dem Ausführungsbeispiel gemäß Fig. 2 kann durch die Bandbegrenzung des zu speichernden Audiosignals die Abtastfrequenz und damit die Kapazität des Speichers entsprechend verringert werden. Ohne besondere Maßnahmen ergibt sich bei zweikanaliger Übertragung für den Speicher eine Kapazität von S = 2·T·Ft·W, wobei Ft die Abtastfrequenz, W die Quantisierungsgenauigkeit und T die Dauer des zu speichernden Zeitabschnitts ist. Bei Ft = 4,1 kHz, W = 16 Bit und T = 46 ms, ergibt sich dann eine Kapazität von weniger als 64 Kbit, so daß für den Speicher preiswerte Standardbauteile zur Verfügung stehen.

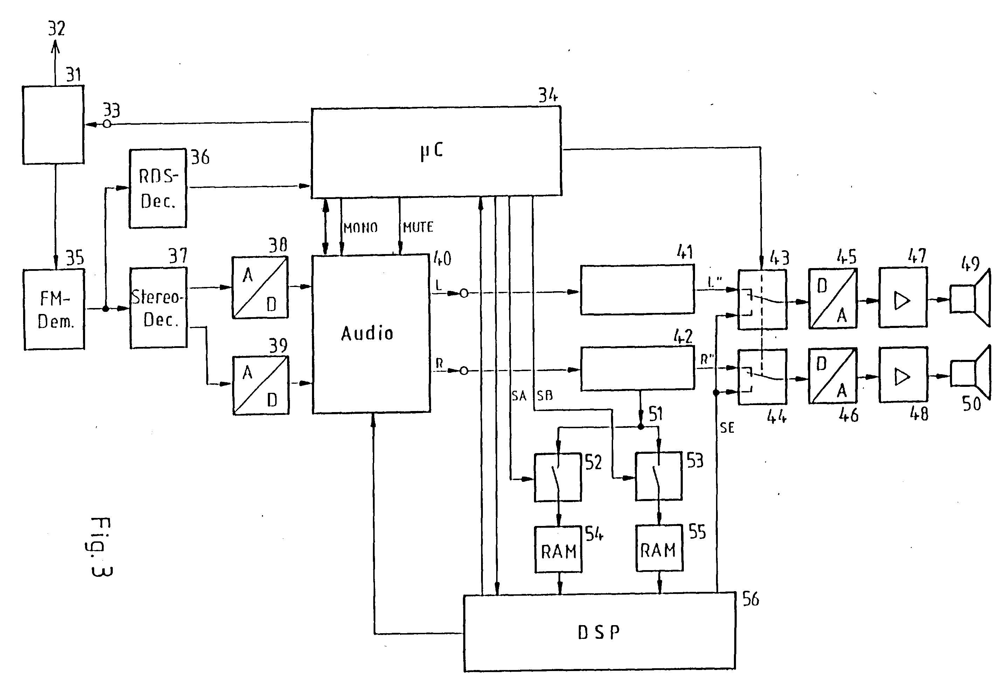

Der in Fig. 3 dargestellte Rundfunkempfänger weist ein Empfangsteil 31 auf, das Signale von einer Antenne 32 erhält und über einen Steuereingang 33 von einem Mikrocomputer 34 auf die jeweils zu empfangene Frequenz einstellbar ist. An das Empfangsteil 31 schließt sich ein Frequenzdemodulator 35 an, dessen Ausgang mit einem RDS-Decoder 36 und einem Stereo-Decoder 37 verbunden ist. Das Ausgangssignal des RDS-Decoders 36 wird zur weiteren Auswertung bzw. zur Anzeige dem Mikrocomputer 34 zugeführt. Die beiden Audiosignale werden bei 38, 39 analog/digital-gewandelt und gelangen in eine Signalverarbeitungsschaltung 40, mit deren Hilfe verschiedene Einstellungen, wie beispielsweise Lautstärke und Klangfarbe vorgenommen werden können. Außerdem dient die Signalverarbeitungsschaltung 40 zur Stummschaltung und zur Umschaltung zwischen MONO und STEREO durch Steuersignale, welche vom Mikrocomputer 34 zugeführt werden.

Die an Ausgängen der Signalverarbeitungsschaltung 40 anstehenden Audiosignale L und R werden über jeweils eine Verzögerungseinrichtung 41, 42, einen steuerbaren Umschalter 43, 44, einen Digital/Analog-Wandler 45, 46 und eine Endstufe 47, 48 Lautsprechern 49, 50 zugeführt. Die Verzögerungseinrichtung 42 weist einen Ausgang 51 auf, bei welchem das Audiosignal R lediglich um einen kleinen Teil gegenüber der gesamten Verzögerungszeit der Verzögerungseinrichtung 42 verzögert ist. Von diesem Ausgang 51 kann das verzögerte Audiosignal R über jeweils einen steuerbaren Schalter 52, 53 in Schreib-Lese-Speicher 54, 55 eingelesen werden. Ausgänge der Schreib-Lese-Speicher 54, 55 sind mit Eingängen eines digitalen Signalprozessors 56 verbunden.

Die steuerbaren Schalter 52, 53 werden vom Mikrocomputer 34 gesteuert. Zum Austausch von Daten bzw. Steuersignalen sind der Mikrocomputer 34, die Signalverarbeitungsschaltung 40 und der digitale Signalprozessor 56 direkt miteinander verbunden. In diesem Zusammenhang sei erwähnt, daß mit den Rechenoperationen zur Bildung der Ersatzsignale der digitale Signalprozessor 56 nicht ausgelastet ist und somit für weitere Aufgaben, beispielsweise die Klangregelung, Lautstärkeregelung oder in Abänderung des in Fig. 3 dargestellten Ausführungsbeispiels zur Demodulation des Radio-Daten-Signals zur Verfügung steht.

Die vom Mikrocomputer 34 steuerbaren Umschalter 43, 44 dienen dazu, entweder die verzögerten Audiosignale L, R oder die vom digitalen Signalprozessor erzeugten Ersatzsignale zu den Digital/Analog-Wandlern 45, 46 zu leiten. In diesem Zusammenhang sei erwähnt, daß verschiedene Einzelheiten in Fig. 3 im Sinne einer übersichtlichen Darstellung gewählt wurden. So sind beispielsweise die Umschalter 43, 44 und die Schalter 52, 53 wie mechanische Schalter dargestellt, bei einer Realisierung werden jedoch in der digitalen Schaltungstechnik übliche logische Schaltungen angewendet. Ebenso könnten die Schreib-Lese-Speicher 54, 55 zu einem Speicher vereinigt werden und die Signale durch entsprechende Adressierung getrennt eingeschrieben und ausgelesen werden.

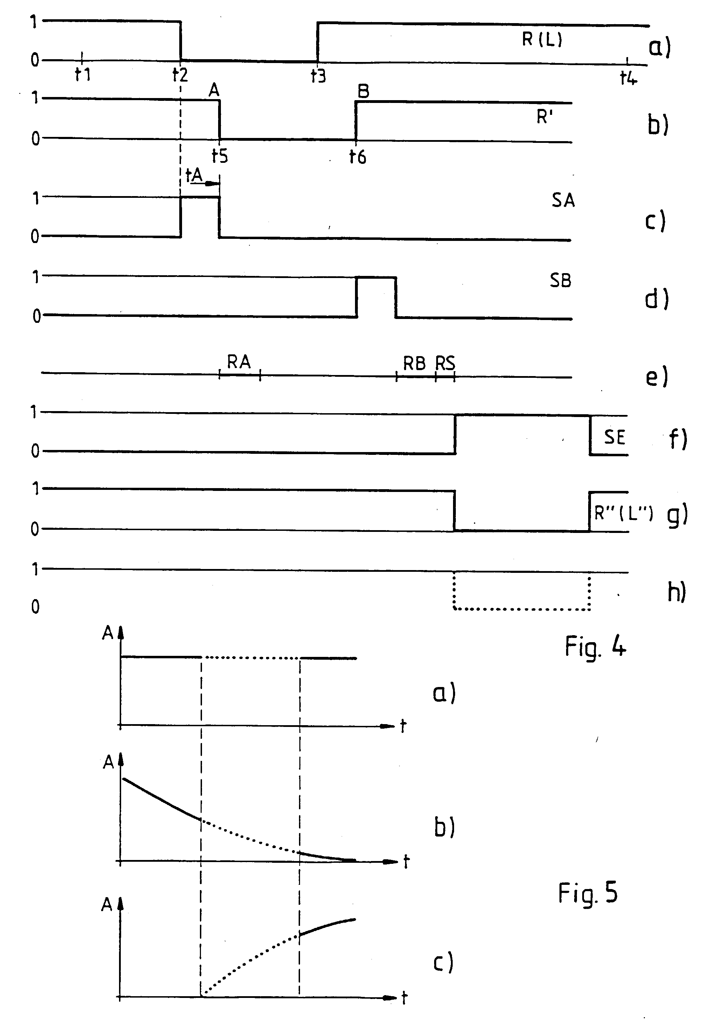

Im folgenden werden anhand von Fig. 4 die zeitlichen Vorgänge bei dem Empfänger nach Fig. 3 erläutert, welche bei dem vorübergehenden Umschalten auf eine andere Frequenz stattfinden. Dabei sind stellvertretend für die Audiosignale digitale Signale dargestellt, wobei 0 "Signal nicht vorhanden" und 1 "Signal vorhanden" bedeutet. Zeile a der Fig. 4 zeigt das Audiosignal R bzw. L an den Ausgängen der Signalverarbeitungsschaltung 40. Zum Zeitpunkt t1 wird die Mono-Wiedergabe eingeschaltet, so daß die Signale L und R gleich sind. Bei t2 beginnt die Stummschaltung wegen der vorübergehenden Umschaltung der Empfangsfrequenz. Ab dem Zeitpunkt t3 ist wieder ein Empfang der ursprünglich empfangenen Frequenz möglich, so daß das Audiosignal wieder seinen vorherigen Pegel einnimmt. Schließlich wird bei t4 der Mono-Betrieb wieder ausgeschaltet. Die Stummschaltung muß nicht wirklich erfolgen, was nach der noch folgenden Funktionsbeschreibung der Umschalter 43, 44 deutlich wird.

Das in Fig. 4, Zeile b dargestellte verzögerte Signal R' am Ausgang 51 der Verzögerungseinrichtung 42 (Fig. 3) ist gegenüber dem Signal R um eine Zeit tA verzögert. Zwischen t2 und t5 wird der Signalabschnitt A vor dem Beginn der Unterbrechung des Signals R' in den Schreib-Lese-Speicher 54 eingeschrieben. Zeile c stellt das Steuersignal SA des vom Mikrocomputer 34 abgegebenen Signals zum Steuern des Schalters 52 dar. Nach dem Ende der Unterbrechung des verzögerten Signals R', beginnend mit dem Zeitpunkt t6, wird ein Zeitabschnitt B durch Schließen des Schalters 53 in den Schreib-Lese-Speicher 55 eingeschrieben, wozu der Schalter 53 vom Mikrocomputer 34 mit dem Steuersignal SB beaufschlagt wird.

Zeile e der Fig. 4 stellt die Rechenzeiten RA und RB zur Analyse der Signalabschnitte A und B sowie einen Zeitabschnitt RS zur Bildung des Ersatzsignals SE aus den durch die Analyse gewonnenen Signalen dar. Nach dem Zeitabschnitt RS gibt der digitale Signalprozessor das Ersatzsignal SE, das in Zeile f dargestellt ist, an die Umschalter 43, 44 ab. An den jeweils anderen Eingängen der Umschalter 43, 44 liegt das in Zeile g dargestellte Signal R'' bzw. L'', das um die gesamte Laufzeit der Verzögerungseinrichtung 41, 42 gegenüber dem Signal R bzw. L verzögert ist. Zeile h zeigt schematisch das mit dem Ersatzsignal aufgefüllte Audiosignal.

In den in Fig. 4, Zeile e dargestellten Rechenzeiten wird im digitalen Signalprozessor 56 getrennt für die Audiosignalabschnitte A und B eine Fourieranalyse durchgeführt, wobei die Komponenten ermittelt werden, die am energiereichsten sind. Die Anzahl der Komponenten bestimmt die Qualität des Ersatzsignals SE, wobei in den meisten Fällen eine realtiv geringe Anzahl, beispielsweise 3, möglicherweise auch lediglich 1, ausreichen wird. Außerdem reicht eine Fourieranalyse in groben Abstufungen aus.

Zur Ermittlung der Komponenten des Audiosignals wird der im Schreib-Lese-Speicher 52 bzw. im Schreib-Lese-Speicher 53 gespeicherte Signalabschnitt in den digitalen Signalprozessor eingelesen. Wenn ein Signalabschnitt einmal vollständig in den digitalen Signalprozessor eingelesen worden ist, ist ein Umlauf beendet, bei welchem das Signal dem Eingang eines digitalen Filters zugeführt wird, das mit einem entsprechenden Programm realisiert ist. Um nun die einzelnen Komponenten dem Audiosignal entnehmen zu können, werden die Filterkoeffizienten nach jedem Umlauf geändert, bis das Spektrum des Audiosignals durchlaufen ist. Anstelle der Änderung der Koeffizienten kann jedoch auch die Taktfrequenz, mit welcher die Audiosignale aus den Schreib-Lese-Speichern ausgelesen werden, stufenweise geändert werden.

Während jeden Umlaufs stellt der digitale Signalprozessor fest, ob die am Filterausgang erhaltene Komponente des Audiosignals größer ist als eine der bereits gespeicherten Komponenten. Zutreffendenfalls wird die gespeicherte Komponente mit kleinerer Amplitude durch die neue ersetzt. Es werden jeweils die Amplitude, die Komponente und gegebenenfalls ein Wert für das Ein- bzw. Ausschwingen gespeichert.

Durch eine Reduzierung der Anzahl der Umläufe ist eine Reduzierung der Rechenzeit möglich. Da sich im Frequenzbereich oberhalb von 8 kHz selten die energiereichsten Komponenten des Audiosignals befinden, kann dieser Frequenzbereich unberücksichtigt bleiben. Damit kann auch die Abtastfrequenz für die zur Bildung des Ersatzsignals dienenden Signalabschnitte des Audiosignals verringert werden. Dementsprechend ist es ausreichend, wenn nur jeder dritte Abtastwert der Audiosignale über die Schalter 52, 53 in die Schreib-Lese-Speicher 54, 55 eingelesen wird. Damit ermäßigt sich die Kapazität der Schreib-Lese-Speicher entsprechend.

Auch an die Genauigkeit der Amplitude des Ersatzsignals brauchen nicht so hohe Ansprüche gestellt zu werden, so daß zur Erzeugung des Ersatzsignals mit einer geringeren Amplitudenauflösung gearbeitet werden kann.

Sind die Komponenten der Audiosignalabschnitte A und B ermittelt worden, wird mit Hilfe eines weiteren Programms im digitalen Signalprozessor aus den Komponenten beider Signalabschnitte das Ersatzsignal SE ermittelt. In Fig. 5 sind die Hüllkurven von drei verschiedenen Verläufen der Amplitude einer Komponente dargestellt. In Zeile a sind die Amplituden während der Signalabschnitte A und B des Audiosignals gleich hoch, so daß das Ersatzsignal SE konstant ist. Bei dem in Zeile b der Fig. 5 dargestellten Verlauf nimmt die Amplitude der Komponente innerhalb des Bereichs der Signalunterbrechung ab. Es ist demnach zur Erzeugung des Signals SE zwischen einer größeren Amplitude zu Beginn der Unterbrechung und einer kleineren Amplitude am Ende der Unterbrechung zu interpolieren.

Schließlich zeigt Zeile c der Fig. 5 den Fall, daß im Signalabschnitt A die Komponente nicht vorhanden ist, während sie im Signalabschnitt B schon eine gewisse Größe erreicht hat. Auch hier wird eine entsprechende Interpolation vorgenommen. Dabei können die Interpolationen auch nach e-Funktionen vorgenommen werden.

Die zeitgerechte Addition aller berechneten Signalkomponenten-Interpolate ergibt das Ersatzsignal SE, das unmittelbar danach zur Verfügung steht und über die Umschalter 43, 44 anstelle des Audiosignals den Digital/Analog-Wandlern zugeführt wird.

## Patentansprüche

1. Verfahren zur Überbrückung von durch vorübergehendes Umschalten von einer mit einem Rundfunkempfänger empfangenen Frequenz auf eine andere Frequenz entstehenden Audiosignalunterbrechungen,
dadurch gekennzeichnet,
daß in die während des vorübergehenden Umschaltens unterbrochenen Audiosignale Ersatzsignale eingesetzt werden,
und daß die Ersatzsignale durch Verzögern und Wiederholen eines jeweils vor dem vorübergehenden Umschalten empfangenen Signalabschnitts der Audiosignale gebildet werden.

2. Verfahren nach Anspruch 1,
dadurch gekennzeichnet,
daß die zur Bildung der Ersatzsignale dienenden Signalabschnitte bandbegrenzt werden, wobei vorzugsweise eine Bandbegrenzung auf einen Frequenzbereich von etwa 300 Hz bis 5 kHz vorgesehen ist.

3. Verfahren nach Anspruch 1 oder 2,
dadurch gekennzeichnet,
daß zur Verzögerung ein digitaler Speicher, vorzugsweise ein FIFO-Speicher (9), verwendet wird.

4. Verfahren nach einem der Ansprüche 1 bis 3,
dadurch gekennzeichnet,
daß ein mit dem Eingang des digitalen Speichers (9) verbundener Umschalter (8) derart gesteuert wird, daß während des Empfangs der eingestellten Frequenz die digitalen Audiosignale in den Speicher (9) eingeschrieben und zur weiteren Signalverarbeitung (10) geleitet werden und daß während des Empfangs der anderen Frequenz Ausgangssignale des Speichers (9) wieder in den Speicher (9) eingeschrieben und zur weiteren Signalverarbeitung (10) geleitet werden.

5. Verfahren nach einem der Ansprüche 1 bis 4,
dadurch gekennzeichnet,
daß der Zeitpunkt des vorübergehenden Umschaltens und die Verzögerungsdauer von einem Nulldurchgang des Audiosignals abhängig sind.

6. Verfahren nach einem der Ansprüche 1 bis 5,
dadurch gekennzeichnet,
daß zwischen dem unveränderten und dem verzögerten Audiosignal eine Überblendung erfolgt.

7. Verfahren zur Überbrückung von durch vorübergehendes Umschalten von einer mit einem Rundfunkempfänger empfangenen Frequenz auf eine andere Frequenz entstehenden Audiosignalunterbrechungen,
dadurch gekennzeichnet,
daß in die während des vorübergehenden Umschaltens unterbrochenen Audiosignale Ersatzsignale eingesetzt werden,
und daß die Ersatzsignale aus den Audiosignalen vor und nach der vorübergehenden Umschaltung gebildet werden.

8. Verfahren nach Anspruch 7,
dadurch gekennzeichnet,
daß aus den Audiosignalen in Zeitabschnitten, vor und nach dem vorübergehenden Umschalten mit Hilfe einer Fourieranalyse die energiereichsten Komponenten ermittelt werden,
und daß die energiereichsten Komponenten jeweils zwischen den Audiosignalen vor dem vorübergehenden Umschalten und nach dem vorübergehenden Umschalten interpoliert werden.

9. Verfahren nach Anspruch 8,
dadurch gekennzeichnet,
daß die Fourieranalyse in einem digitalen Signalprozessor (56) erfolgt und die Audiosignalabschnitte in Schreib-Lese-Speichern (54, 55) gespeichert werden, und daß ein im digitalen Signalprozessor (56) realisiertes digitales Filter das Spektrum des Audiosignals durch Änderung der Filterkoeffizienten nach den energiereichsten Komponenten absucht.

10. Verfahren nach Anspruch 9,
dadurch gekennzeichnet,
daß der Auslesetakt für die in den Schreib-Lese-Speichern (54, 55) gespeicherten Audiosignalabschnitte stufenweise verändert wird.

11. Verfahren nach einem der Ansprüche 9 oder 10,
dadurch gekennzeichnet,
daß die Ausgänge einer an sich bekannten Audiosignalverarbeitungsschaltung (40) über je eine Verzögerungseinrichtung (41, 42) und je einen steuerbaren Umschalter (43, 44) mit Digital/Analog-Wandlern (45, 46) für das Audiosignal verbunden sind,
daß den steuerbaren Umschaltern (43, 44) ferner von einem digitalen Signalprozessor (56) Ersatzsignale zugeführt werden,
und daß die Eingänge des digitalen Signalprozessors (56) mit Schreib-Lese-Speichern (54, 55) verbunden sind, in die die Audiosignale in Zeitabschnitten vor und nach der kurzzeitigen Umschaltung eingeschrieben werden.

12. Verfahren nach Anspruch 11,
dadurch gekennzeichnet,
daß eine der Verzögerungseinrichtungen (41, 42) mit einer Anzapfung (51) versehen ist, die mit Schaltern (52, 53) verbunden ist, über die Audiosignalabschnitte in einem Schreib-Lese-Speicher (54, 55) gelangen, wobei die Schalter (52, 53) von einem Mikrocomputer gesteuert werden.

13. Verfahren nach einem der vorhergehenden Ansprüche,
dadurch gekennzeichnet, daß während des vorübergehenden
Umschaltens ein Radio-Daten-Signal empfangen und decodiert wird.

14. Verfahren nach einem der vorhergehenden Ansprüche,
dadurch gekennzeichnet, daß während der vorübergehenden Umschaltung ein monauraler Empfang erfolgt.

15. Verfahren nach einem der vorhergehenden Ansprüche,
dadurch gekennzeichnet, daß bereits vor der vorübergehenden Umschaltung auf monauralen Empfang umgeschaltet wird und daß ein Zurückschalten auf Stereoempfang erst nach dem Ende der vorübergehenden Umschaltung erfolgt.

## Claims

1. Method for bridging audio signal interruptions caused by momentary changeover from one frequency received by a broadcast radio receiver to another frequency, characterized in that substitute signals are inserted into the audio signals interrupted during the momentary changeover, and in that the substitute signals are formed by delaying and repeating a signal section of the audio signals which has in each case been received before the momentary changeover.

2. Method according to Claim 1, characterized in that the signal sections which are used to form the substitute signals are band-limited, band-limiting preferably being provided to a frequency range from about 300 Hz to 5 kHz.

3. Method according to Claim 1 or 2, characterized in that a digital memory, preferably an FIFO memory (9), is used for the delay.

4. Method according to one of Claims 1 to 3, characterized in that a changeover switch (8) which is connected to the input of the digital memory (9) is controlled in such a manner that, during reception of the set frequency, the digital audio signals are written to the memory (9) and are passed on for further signal processing (10), and in that, during reception of the other frequency, output signals from the memory (9) are written to the memory (9) again and are passed on for further signal processing (10).

5. Method according to one of Claims 1 to 4, characterized in that the time of the momentary changeover and the delay duration are dependent on a zero crossing of the audio signal.

6. Method according to one of Claims 1 to 5, characterized in that the unchanged audio signal and the delayed audio signal are overlaid.

7. Method for bridging audio signal interruptions caused by momentary changeover from one frequency received by a broadcast radio receiver to another frequency, characterized in that substitute signals are inserted into the audio signals interrupted during the momentary changeover, and in that the substitute signals are formed from the audio signals before and after the momentary changeover.

8. Method according to Claim 7, characterized in that the highest-energy components are determined, by Fourier analysis, from the audio signals in time intervals before and after the momentary changeover, and in that the highest-engergy components are in each case interpolated between the audio signals before the momentary changeover and after the momentary changeover.

9. Method according to Claim 8, characterized in that the Fourier analysis is carried out in a digital signal processor (56) and the audio signal sections are stored in read/write memories (54, 55), and in that a digital filter which is provided in the digital signal processor (56) changes the filter coefficients to search the spectrum of the audio signal for the highest-engergy components.

10. Method according to Claim 9, characterized in that the read clock rate for the audio signal sections stored in the read/write memories (54, 55) is varied in steps.

11. Method according to one of Claims 9 or 10, characterized in that the outputs of an audio signal processing circuit (40) which is known per se are connected via in each case one delay device (41, 42) and in each case one controllable changeover switch (43, 44) to digital/analogue converters (45, 46) for the audio signal, in that the controllable changeover switches (43, 44) are furthermore supplied by a digital signal processor (56) with substitute signals, and in that the inputs of the digital signal processor (56) are connected to read/write memories (54, 55) to which the audio signals are written in time intervals before and after the brief changeover.

12. Method according to Claim 11, characterized in that one of the delay devices (41, 42) is provided with a tap (51), which is connected to switches (52, 53) via which the audio signal sections in a read/write memory (54, 55) pass, the switches (52, 53) being controlled by a micro computer.

13. Method according to one of the preceding claims, characterized in that a radio data signal is received and decoded during the momentary changeover.

14. Method according to one of the preceding claims, characterized in that monophonic reception is used during the momentary changeover.

15. Method according to one of the preceding claims, characterized in that a changeover to monophonic reception takes place even before the momentary changeover, and in that the switch back to stereophonic reception does not take place until after the end of the momentary changeover.

## Revendications

1. Procédé pour combler des interruptions de signal audio provoquées par la commutation provisoire d'une fréquence reçue par un récepteur radio, sur une autre fréquence,
caractérisé en ce qu'
• on introduit des signaux de remplacement dans les signaux audio interrompus pendant la commutation provisoire, et
• on forme les signaux de remplacement en retardant et en répétant un segment des signaux audio reçus chaque fois avant la commutation provisoire.

2. Procédé selon la revendication 1,
caractérisé en ce que
les segments de signaux servant à former les signaux de remplacement sont limités dans la bande et l'on prévoit de préférence une limitation de bande à une plage de fréquence d'environ 300 Hz à 5 kHz.

3. Procédé selon l'une quelconque des revendications 1 ou 2,
caractérisé en ce que
pour retarder une mémoire numérique, on utilise de préférence une mémoire FIFO (9).

4. Procédé selon l'une quelconque des revendications 1 ou 3,
caractérisé en ce qu'
• on commande un commutateur (8) relié à l'entrée de la mémoire numérique (9) pour que, pendant la réception de la fréquence réglée, on enregistre les signaux audio numériques dans la mémoire (9), et on les transmet pour la suite du traitement de signal (10), et
• pendant la réception de l'autre fréquence, on enregistre de nouveau dans la mémoire (9) les signaux de sortie de la mémoire (9) et on les transmet pour la suite du traitement (10).

5. Procédé selon l'une des revendications 1 ou 4,
caractérisé en ce que
l'instant de la commutation provisoire et la durée de la temporisation dépendent du passage par zéro du signal audio.

6. Procédé selon l'une des revendications 1 ou 5,
caractérisé en ce qu'
on fait une surimpression entre le signal audio inchangé et le signal audio retardé.

7. Procédé pour combler des interruptions de signal audio provoquées par la commutation provisoire d'une fréquence reçue par un récepteur radio, sur une autre fréquence,
caractérisé en ce qu'
• on introduit des signaux de remplacement dans les signaux audio interrompus par la commutation provisoire, et
• on forme les signaux de remplacement à partir des signaux audio en amont et en aval de la commutation provisoire.

8. Procédé selon la revendication 7,
caractérisé en ce qu'
• à partir des signaux audio, dans des intervalles de temps avant et après la commutation provisoire, on détermine les composantes les plus riches en énergie en procédant à une analyse de Fourier, et
• on interpole des composantes les plus riches en énergie chaque fois entre les signaux audio avant la commutation provisoire et après la commutation provisoire.

9. Procédé selon la revendication 8,
caractérisé en ce qu'
• on effectue l'analyse de Fourier dans un processeur numérique de signal (56) et on met en mémoire les segments de signaux audio dans des mémoires vives (54, 55), et
• un filtre numérique réalisé par un processeur numérique de signal (56) recherche le spectre du signal audio en modifiant les coefficients de filtre pour trouver les composantes les plus riches en énergie.

10. Procédé selon la revendication 9,
caractérisé en ce qu'
on modifie par étapes la cadence de lecture des segments de signaux audio mémorisés dans les mémoires vives (54, 55).

11. Procédé selon l'une des revendications 9 ou 10,
caractérisé en ce qu'
• on relie les sorties d'un circuit de traitement de signaux audio connu (40), par chaque fois une installation de temporisation (41, 42) et chaque fois un commutateur commandé (43, 44) avec des convertisseurs numériques/analogiques (45, 46), pour le signal audio,
• on applique des signaux de remplacement aux commutateurs commandés (43, 44), à partir d'un processeur numérique de signal (56), et
• on relie les entrées du processeur numérique de signal (56) aux mémoires vives (54, 55) dans lesquelles on a enregistré les signaux audio dans des segments de temps avant et après la commutation de courte durée.

12. Procédé selon la revendication 11,
caractérisé en ce que
les installations de temporisation (41, 42) sont munies d'une prise (51) reliée à des interrupteurs (52, 53) par lesquels les segments de signaux audio arrivent dans une mémoire vive (54, 55), les interrupteurs (52, 53) étant commandés par un micro-ordinateur.

13. Procédé selon l'une des revendications précédentes,
caractérisé en ce qu'
on reçoit et décode un signal de données radio pendant la commutation provisoire.

14. Procédé selon l'une quelconque des revendications précédentes,
caractérisé en ce que
la commutation provisoire se fait pendant la réception en mode mono.

15. Procédé selon l'une quelconque des revendications précédentes,
caractérisé en ce que
• déjà avant la commutation provisoire sur la réception en mode mono, on commute, et
• la commutation en retour sur la réception en mode stéréo se fait seulement après la fin de la commutation provisoire.
